# FASCICULE DE BREVET EUROPEEN

(11) **EP 2 258 636 B1**
(45) Date de publication et mention de la délivrance du brevet: **17.04.2013**
(21) Numéro de dépôt: 10290289.7
(22) Date de dépôt: 03.06.2010
(51) Int. Cl.: B65G 21/02, B65G 21/06

(54) **Support de convoyeur à bande, convoyeur comprenant un tel support et kit formant support de convoyeur à bande**
Unterbau eines Bandförderers, einen solchen Unterbau umfassender Bandförderer und Unterbau-Kit für Bandförderer
Conveyor belt support, conveyor including such a support and kit forming a conveyor belt support

(30) Priorité: 04.06.2009 FR 0902696
(43) Date de publication de la demande: 08.12.2010
(73) Titulaire: Malteurop Groupe, 51100 Reims (FR)
(72) Inventeur: Julien, Denis, 51360 Beaumont sur Vesle (FR)
(74) Mandataire: de Kernier, Gabriel

(56) Documents cités:
- DE-B- 1 282 548
- FR-A- 1 547 943
- GB-A- 1 030 174
- GB-A- 1 195 793
- US-A- 3 656 607
- US-A- 4 261 460
- US-A- 4 475 648
- US-A- 4 524 864

## Description

L'invention concerne un support de convoyeur à bande pour le domaine technique du maltage, ainsi q'un bit et un convoyeur à bande correspondant.

Lors du maltage, on cherche à reproduire le développement naturel de germination d'une céréale, afin que celle-ci développe certaines enzymes, telles que l'amylase ou la protéase par exemple. On utilise généralement de l'orge, ou encore du seigle, du blé, du sorgho ou de l'épeautre, en tant que céréale.

Le maltage comprend le traitement de la céréale par une succession d'opérations, après quoi on obtient du malt. Il existe de gros besoins en malt de différentes propriétés et qualités selon le domaine d'utilisation. Le brassage, par exemple, nécessite un malt adapté et conditionné pour la fabrication de la bière.

Les principes généraux du maltage sont quasi ancestraux. On en trouve une synthèse dans l'ouvrage "Malterie et Brasserie", de Jean SUNIER, 2ème édition, imprimerie La Concorde, Lausanne, 1968, ou encore dans sa réédition plus récente sous le nouveau titre "La Fabrication de la Bière", Alliage éditeur, 26 septembre 2007, ISBN 13 No. 978 2921327602.

Aujourd'hui, le maltage est réalisé dans des installations industrielles appelées malteries. Une malterie a pour objet la mise en oeuvre d'un procédé de production automatisé qui procure un excellent rendement tant qualitatif que quantitatif, tout en réduisant les coûts d'investissement, de fonctionnement et de fabrication: emprise de terrain, génie civil de construction, besoins en énergie, en particulier.

De façon générale, une malterie comporte au moins les éléments suivants :
- un outil de trempage, pour réaliser une opération de trempage du grain,
- au moins un germoir, pour réaliser une opération de germination du grain trempé,
- au moins une touraille, pour réaliser une opération de touraillage, et
- un système de transport du grain de l'un à l'autre de ces éléments.

L'invention concerne plus particulièrement ce système de transport du grain.

Chacun des éléments précités est lié à des conditions opératoires strictes. Les exigences de températures, de temps d'exposition ou encore d'hygiène sont nombreuses. Des contraintes de coûts existent également. Le respect de ces exigences et contraintes nécessite une surveillance constante des éléments de la malterie mais aussi une conception ingénieuse de la malterie afin d'optimiser la production de malt.

Les malteries doivent en outre s'efforcer de réunir les conditions et besoins requis par l'industrie alimentaire, notamment pour assurer une production de malt qui réponde aux besoins de consommation.

US 4 261 460 décrit un support de convoyeur à bande correspondant au préambule de la revendication 1.

La présente invention vient améliorer la situation.

Le dispositif proposé vise un support de convoyeur à bande comprenant deux plots-supports de bande présentant chacun un passage traversant propre à loger un profilé parmi deux profilés de bâti rigidement liés l'un à l'autre, chacun des plots-supports présentant une face supérieure sensiblement parallèle à la direction du passage traversant, une face inférieure, parallèle à la face supérieure et opposée à cette dernière par rapport au passage traversant, et une première face latérale, sensiblement perpendiculaire à la face supérieure et à la face inférieure et sensiblement parallèle à la direction du passage traversant, et d'un organe de soutien de bande d'un premier type fixé sur la face supérieure de chacun des deux plots-supports, la face inférieure de chacun des plots-supports présentant des moyens de fixation adaptés à un organe de soutien de bande d'un second type, et la première face latérale de chacun des plots-supports présentant des moyens de fixation adaptés à une traverse de bâti.

Le support proposé simplifie la réalisation d'un convoyeur à bande. Il présente une structure modulaire, dont le plot-support forme l'élément de base. Il en résulte des coûts de fabrication restreints, en particulier grâce à la réduction du nombre de pièces différentes nécessaires à la réalisation du support de bande. Le support proposé présente également une facilité d'intégration et de montage avantageuse, liée notamment au caractère modulaire du support. Il peut s'adapter à des environnements différents. La configuration des élément utilisés facilite leur nettoyage, empêche leur salissure trop rapide et évite la rétention de grain. Ceci constitue un avantage tout particulier dans un domaine de production alimentaire comme celui de la malterie. Ce dispositif offre également une grande flexibilité puisqu'il suffit d'adapter la longueur des tubes support et le nombre de support pour que le dispositif soit agencé en n'importe quel lieu.

D'autres caractéristiques du proposé, complémentaires ou de remplacement, sont énoncées ci-après.

Une traverse de bâti est fixée à la première face latérale de chacun des plots-supports assurant la liaison rigide des deux profilés de bâti.

L'organe de soutien de bande d'un premier type comprend un lien transversal souple maintenu entre deux pattes-supports verticales, chacune des pattes-supports verticales étant fixée à la face supérieure de l'un des deux plots-supports.

Le lien transversal souple comprend un câble souple et des galets de guidage montés sur ledit câble souple avec possibilité de rotation.

Un organe de soutien de bande d'un second type fixé sur la face inférieure de chacun des deux plots-supports.

L'organe de support de bande d'un second type comprend un arbre de guidage de bande et une paire de pattes d'accrochage, chacune des pattes de cette paire étant fixée sur la face inférieure l'un des deux plots-supports, l'arbre de guidage de bande étant soutenu par la paire de pattes d'accrochage avec possibilité de rotation.

L'arbre de guidage de bande comporte une pluralité de galets de guidage de bande.

On propose également un kit de support pour convoyeur à bande comprenant deux plots-supports de bande présentant chacun un passage traversant propre à loger un profilé parmi deux profilés de bâti rigidement liés l'un à l'autre, chacun des plots-supports présentant une face supérieure sensiblement parallèle à la direction du passage traversant, une face inférieure, parallèle à la face supérieure et opposée à cette dernière par rapport au passage traversant, et une première face latérale, sensiblement perpendiculaire à la face supérieure et à la face supérieure et sensiblement parallèle à la direction du passage traversant, et au moins élément du groupe formé d'un organe de soutien de bande d'un premier type à fixer sur la face supérieure de chacun des deux plots-supports, d'un organe de soutien de bande d'un second type à fixer sur la face inférieure de chacun des plots-supports et d'une traverse de châssi à fixer sur la première face latérale de chacun des deux plots-supports.

On propose enfin un convoyeur à bande comprenant une pluralité de supports tels que proposés.

D'autres caractéristiques et avantages de l'invention apparaîtront à l'examen de la description détaillée ci-après et des dessins annexés, sur lesquels :
- la figure 1 est une vue en perspective d'une partie d'un convoyeur à bande,
- la figure 2 est une vue de côté de la partie du convoyeur de la figure 1,
- la figure 3 est une vue de face de la partie du convoyeur de la figure 1,
- la figure 4 est une vue en perspective partielle d'un support pour la partie de convoyeur de la figure 1, dans une première configuration,
- la figure 5 est une vue en perspective partielle d'un support pour la partie de convoyeur de la figure 1, dans une seconde configuration,
- la figure 6 est une vue en perspective partielle d'un support pour la partie de convoyeur de la figure 1, dans une troisième configuration,
- la figure 7 est une vue de côté d'un tronçon de convoyeur à bande,
- la figure 8 est une vue de face d'un support pour la partie de convoyeur de la figure 1, dans une troisième configuration, et
- la figure 9 est une vue de face d'un support pour la partie de convoyeur de la figure 1, dans une quatrième configuration.

Les dessins comprennent pour l'essentiel des éléments de caractère certain. Ils pourront non seulement servir à mieux faire comprendre l'invention, mais aussi contribuer à sa définition, le cas échéant.

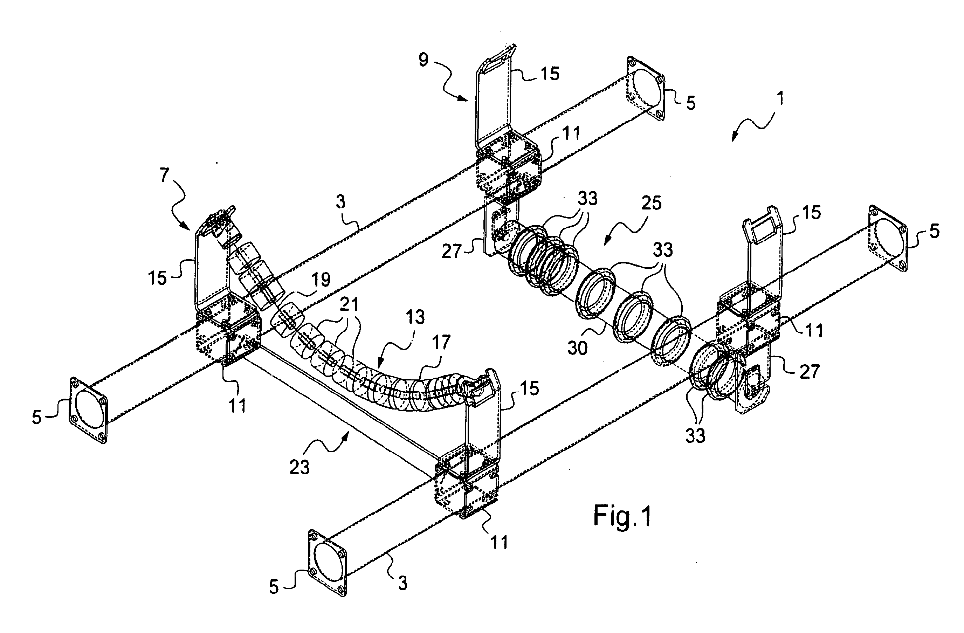

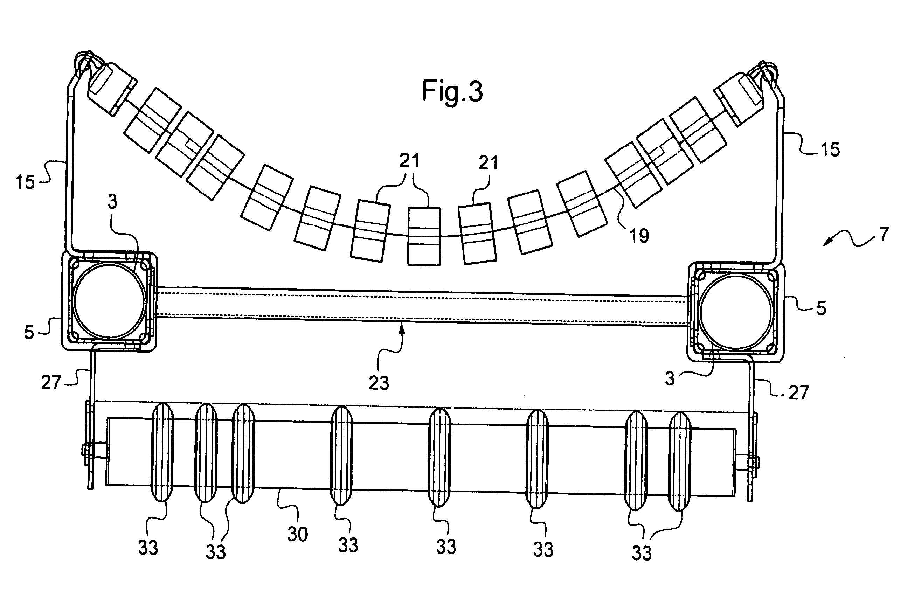

Les figures 1 à 3 montrent un tronçon de convoyeur à bande 1.

Pour plus de clarté, la bande en question n'est pas représentée sur ces figures. Pour l'essentiel, il s'agit d'une longue bande en matière synthétique autorisée dans le domaine alimentaire. Cette bande est mue par un dispositif d'entraînement motorisé, non représenté.

Le tronçon 1 comprend deux poutrelles de bâti 3, disposées parallèlement l'une à l'autre. Chacune de ces poutrelles de bâti 3 est réalisée ici sous la forme d'un profilé tubulaire de section transversale circulaire, ce qui évite toute rétention de grain.

Chaque poutrelle 3 présente à chacune de ses extrémités longitudinales une embase de fixation 5, généralement plane et disposée perpendiculairement à l'axe longitudinal de cette poutrelle 3. Chaque embase 5 est munie de perçages pour la fixation de la poutrelle 3 respective à d'autres éléments de structure mécaniques, y compris d'autres poutrelles 3 analogues, pour compléter le bâti destiné au convoyeur à bande.

Un support de bande d'une première configuration, ou premier support de bande 7, est monté à cheval sur les deux poutrelles 3, transversalement à celles-ci.

Un support de bande d'une seconde configuration, ou second support de bande 9, est monté à cheval sur les deux poutrelles 3, transversalement à celles-ci.

Le premier support de bande 7 comprend deux plots-supports de bande 11. Chacun de ces plots-supports 11 est emmanché sur l'une des poutrelles 3, en vis-à-vis de l'autre plot-support 11 du premier support de bande 7 en question.

Le premier support de bande 7 comprend en outre un organe de soutien de bande d'un premier type, ou premier organe de soutien 13, fixé à chacun des deux plots-support 11 de ce premier support de bande 7.

Le premier organe de soutien 13 comprend une paire de pattes de fixation 15, d'allure générale allongée, qui s'étendent verticalement, et un lien souple 17, destiné à supporter la bande, accroché à chacune de ses extrémités à une patte de fixation 15.

Le lien souple 17 comprend un câble 19 sur lequel sont montés plusieurs éléments de guidage.

Ces éléments de guidage se présentent ici sous la forme de galets 21 qui sont surmoulés sur le câble 19, le câble 19 est alors fixé aux pattes 15 avec possibilité de rotation sur lui-même. D'autres réalisations peuvent être envisagées pour ces éléments de guidage : par exemple, des boules en résine et en carbone peuvent être montées libres de rotation, par exemple, sur le câble 19. Dans ce dernier cas, le câble peut être fixé aux pattes 15 sans possibilité de rotation particulière.

Le premier support de bande 7 comprend encore une traverse 23, dont chacune des extrémités longitudinales est fixée à l'un des plots-supports 11 de ce premier support de bande 7.

La traverse 23 rigidifie le bâti partiellement constitué des poutrelles 3. Elle peut être vue comme une partie de ce bâti.

Le second support de bande 9 est analogue au premier support de bande 7, à l'exception qu'il ne comprend aucune traverse 23 et qu'il comporte en outre un organe de soutien de bande d'un second type, ou second organe de soutien 25. En particulier, le second support de bandes 9 comprend lui aussi un premier organe de soutien de bande 13, bien que celui-ci ne soit pas représenté sur la figure 1.

Le second organe de soutien 25 comprend une paire de pattes d'accrochage 27, de forme générale allongée, s'étendant verticalement vers le bas. À chaque fois, une patte d'accrochage 27 est fixée à l'un des plots-supports 11 du second support de bande 9 en question.

Le second organe de soutien 25 comprend encore un arbre de guidage de bande 30, dont chacune des extrémités est maintenue par une patte d'accrochage 27. L'arbre de guidage de bande 30 s'étend transversalement à la direction longitudinale des poutrelles 3.

L'arbre de guidage 30 comprend un arbre principal 31, sur lequel sont montés une pluralité de galets de guidage annulaires 33.

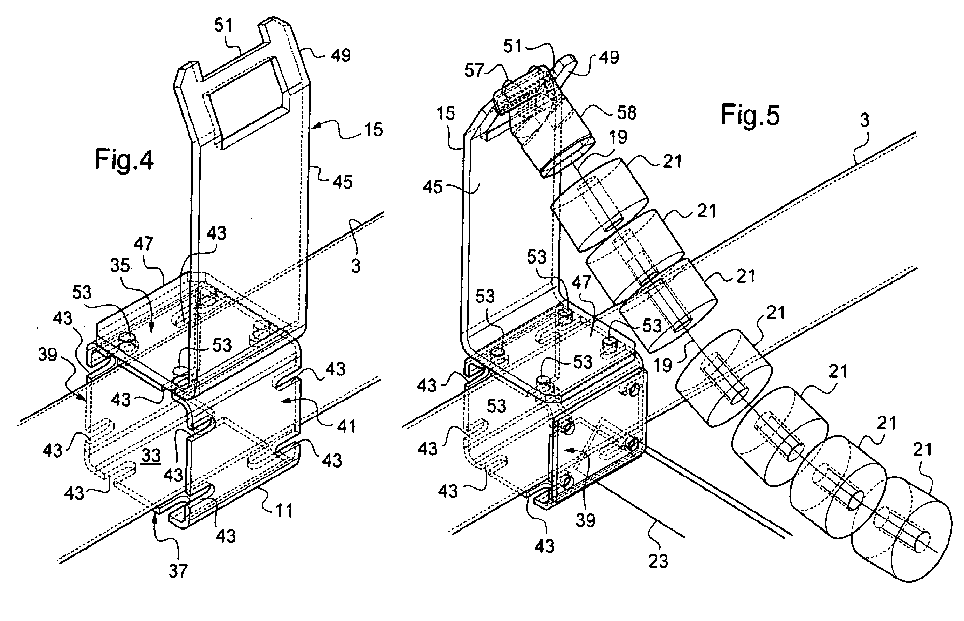

La figure 4 détaille une partie du premier support de bande 7.

Le plot-support 11 se présente sous la forme d'une portion longitudinale d'un profilé métallique creux, de section transversale généralement carrée.

Autrement dit, le plot-support 11 présente un passage traversant central de section transversale généralement carrée, qui permet le logement d'une partie d'une poutrelle allongée 3.

Le plot-support 11 présente une première face, ou face supérieure 35, disposée parallèlement à la direction du passage traversant 33, et une seconde face, ou face inférieure 37, parallèle à la face supérieure 35 et opposée à cette dernière par rapport au passage traversant 33.

Le plot-support 11 comprend encore une première face latérale 39, reliant la face supérieure 35 à la face supérieure 37, et s'étendant parallèlement à la direction du passage traversant 33. La première face latérale 39 est définie de manière que la première face latérale 39 de chacun des plots-supports 11 d'un premier support de bande 7 ou d'un second support de bande 9 se trouve en vis-à-vis de la première face latérale 39 de l'autre plot-support 11 du support de bande 7 ou 9 en question.

Le plot-support 11 comprend enfin une seconde face latérale 41, parallèle à la première face latérale 39 et opposée à cette dernière par rapport au passage traversant 33.

Chacune de la face supérieure 35, la face inférieure 37, la première face latérale 39 et la seconde face latérale 41 est pourvue de quatre perçages oblongs 43 s'étendant suivant la direction longitudinale de la poutrelle allongée 3. Les perçages oblongs 43 sont disposés, par paires, au voisinage des bords libres de la face en question. Chaque paire de perçages oblongs 43 de chacune de la face supérieure 35, la face inférieure 37, la première face latérale 39 et la seconde face latérale 41 est disposée en vis-à-vis de l'autre paire de perçages 43 de la face en question.

Chaque perçage oblong 43 est ouvert sur le bord libre proche de sa face respective.

Chaque perçage oblong 43 est adapté au passage d'un élément de fixation de type vis/écrou pour le maintien d'un élément constitutif de l'un des premiers supports de bande 7 et second support de bande 9. Chaque perçage oblong 43 participe ainsi à la fixation de l'un des premiers supports de bande 7 et second support de bande 9.

A chaque fois, l'arête de jonction entre deux faces d'un même plot support 11 est réalisée sous la forme d'un arrondi, pour réduire encore le risque d'une rétention de grain.

Sur la figure 4, la face supérieure 35 du plot-support 11 reçoit une patte de fixation 15.

La patte de fixation 15 comprend une partie principale 45, allongée dans la direction verticale et généralement plate, et une partie d'embase 47, reliée à la partie principale 45 s'étendant perpendiculairement à cette dernière.

La patte de fixation 15 comprend encore une partie d'accrochage 49, reliée à l'extrémité longitudinale de la partie principale 45 opposée à la partie d'embase 47.

La partie d'accrochage 49 est légèrement inclinée vers la poutrelle 3 opposée par rapport à la partie principale 45 et présente une partie formant axe d'accrochage 51 s'étendant généralement de manière parallèle à la poutrelle 3.

Ici, la patte de fixation 15 est réalisée sous la forme d'une pièce de tôle métallique pliée et découpée.

La partie d'embase 47 présente une face inférieure destinée à venir en appui plan sur la face supérieure 35 du plot-support 11. La partie d'embase 47 est de forme correspondant à cette face supérieure 35.

La partie d'embase 47 présente quatre perçages, non représentés, destinés à coïncider, au moins partiellement, avec les perçages oblongs 43 respectifs de la face supérieure 35 du plot-support 11, en sorte que des vis de fixation 53 peuvent être utilisées pour maintenir la patte de fixation 15 et le plot-support 11 fermement liés entre eux.

La figure 5 montre que le câble 19 peut s'accrocher à la partie formant axe d'accrochage 51 d'une patte de fixation 15 grâce à un élément d'ancrage 55 relié à chacune des extrémités de ce câble 19. Chaque élément d'ancrage 55 est muni de crochets 57 venant en prise sur la partie formant axe d'accrochage 51 de la patte de fixation 15.

Le câble 19 est monté libre de rotation par rapport aux crochets 57, par exemple, chaque extrémité du câble 19 est montée sur la bague intérieure d'un roulement à billes (non représenté), lequel roulement est logé dans un boîtier 58 fermement lié aux crochets 57. Dans le cas où les galets 21 sont libres de rotation autour du câble 19, ce dernier peut être fixé aux crochets 57 fermement par tous moyens connus.

La traverse 23 comprend un profilé transversal 59 dont chacune des extrémités longitudinales est fixée à une partie d'embase 61, réalisée sous la forme d'une portion de tôle métallique.

Chacune des parties d'embase 61 est destinée à venir en appui plan sur la première face latérale 39 d'un plot-support 11. La partie d'embase 61 est munie de perçages destinés à coïncider, au moins partiellement, avec les trous oblongs 43 de cette première face latérale 39 pour permettre le passage de vis en tant qu'éléments de fixation de la traverse 23 sur le plot-support 11. Le profilé de la traverse 23 est généralement plat et disposé de manière inclinée horizontalement pour réduire les possibilités de rétention de grain sur cette traverse.

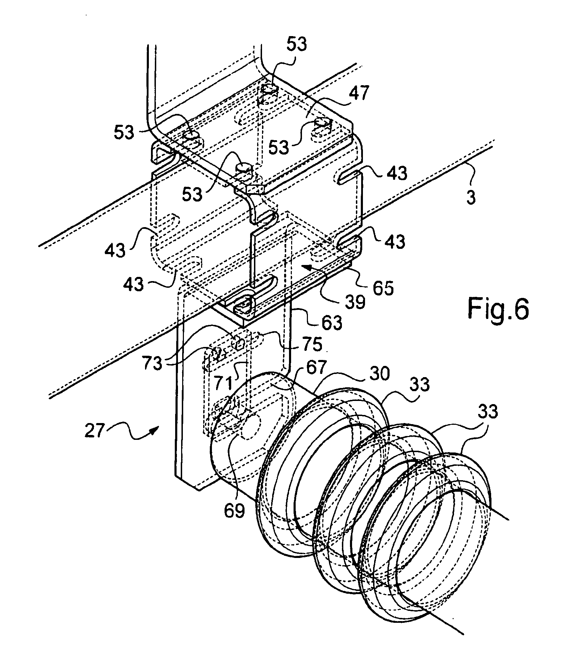

Sur la figure 6, la patte d'accrochage 27 comprend une partie principale 63 généralement allongée et plate s'étendant perpendiculairement à la poutrelle allongée 3, vers le bas. La patte d'accrochage 27 comprend une partie d'embase 65, généralement plane, s'étendant perpendiculairement à la direction d'extension de la partie principale 63 et parallèlement à la direction de la poutrelle allongée 3. La partie d'embase 65 est reliée à la partie principale 63.

La patte d'accrochage 27 est réalisée ici sous la forme d'une pièce en tôle métallique pliée et découpée.

La partie principale 63 de la patte d'accrochage 27 est percée d'une rainure 67, ouverte sur l'un des bords longitudinaux de la partie principale 63.

La rainure 67 est adaptée au passage d'un tourillon 69 supportant avec possibilité de rotation l'arbre principal 31. Le tourillon 69 présente deux méplats axialement opposés, qui coopèrent avec les bords longitudinaux de la rainure 67 pour empêcher toute rotation du tourillon 69. Le tourillon 69 est solidaire d'une plaque de fixation 71 disposée du côté opposé à l'arbre principal 31 par rapport à la partie principale 63 de la patte d'accrochage 27. La plaque de fixation 71 présente deux perçages 73, qui coïncident avec un trou oblong 75 ménagé dans la partie principale 63 de la patte d'accrochage 27, en sorte qu'une fixation par vis peut être assurée entre la plaque de fixation 71 et la patte d'accrochage 27 pour maintenir le tourillon 69, et par conséquent l'arbre principal 31.

Le premier support de bande 7 et le second support de bande 9 sont modulaires. Ils comprennent tous deux un plot-support 11 identique, lequel peut être utilisé pour constituer un premier support de bande 7 ou un second support de bande 9 en fonction des éléments qui lui sont adjoints sur l'une de sa face supérieure 35, sa face inférieure 37, sa première face latérale 39 et seconde face latérale 41. On obtient ainsi un support peu coûteux à réaliser et facile à installer.

Une paire de plots-supports 11 peut être commercialisée sous la forme d'un kit de support de bande de convoyeur, lequel kit peut comprendre en outre un ou plusieurs des éléments suivants: une paire de pattes d'accrochage 27, une paire de pattes de fixation 25, une traverse 23, un lien souple 17, un arbre de guidage 30, des éléments de visserie.

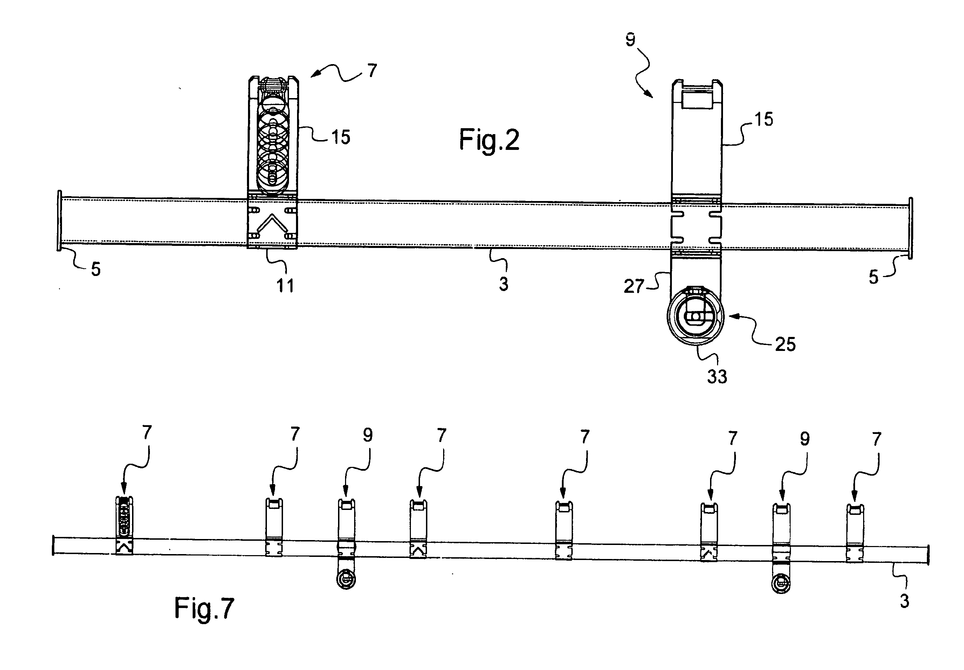

La figure 7 montre qu'une poutrelle 3 reçoit une pluralité de plots-supports de bande 11, sur lesquels est tantôt fixé un premier organe de soutien 13 et/ou un second organe de soutien 25. En option, certains au moins de ces plots-support de bandes 11 peuvent recevoir une traverse 23.

Par multiplication des tronçons 1, il est possible de réaliser un support complet pour l'ensemble d'un convoyeur à bande, de longueur souhaitée. Le support du convoyeur constitue une partie substantielle d'un convoyeur, comme l'est également le bloc moteur par exemple.

Chaque plot-support 11 peut être utilisé pour la fixation d'autres éléments constitutifs d'un convoyeur à bande.

Par exemple, la figure 7 montre que la seconde face latérale 41 de chaque plot-support 11 peut recevoir une patte de protection 100 destinée à recouvrir au moins le support de bande correspondant, à l'exception de la bande en question. Chacune des pattes de protection 100 comprend une partie de soutien 101 sous la forme d'une portion plane s'entendant verticalement, et une partie de chapeau 103, sous la forme d'une portion de plaque métallique pliée, reliée à la partie de soutien 101 et qui couvre le support de bande, en particulier, la patte de support 15, le plot support 11 et une partie du lien souple 17 ne portant par la bande. L'extrémité libre de la partie de chapeau 103 supporte une bavette d'étanchéité 104 en contact avec la bande et qui empêche le grain d'aller se loger dans le support de bande. La bavette d'étanchéité 104 peut être réalisée en caoutchouc, par exemple et être fixée par l'intermédiaire d'une contre-plaque et de vis au chapeau 103.

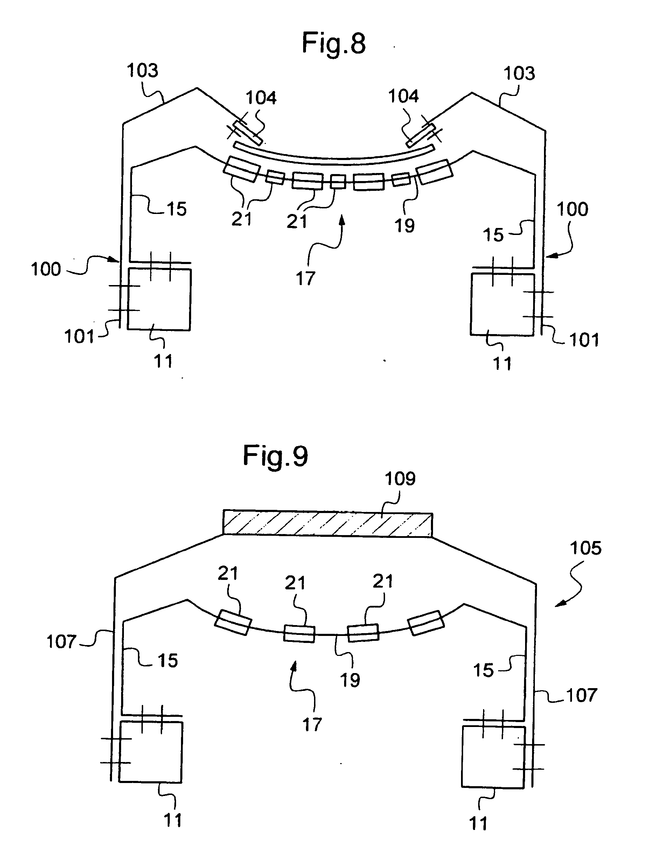

La figure 8 montre un autre exemple, dans lequel la seconde face latérale 41 d'un plot-support 11 est utilisée pour supporter un capot 105. Le capot 105 est réalisé en deux partie latérales 107, chacune d'elles étant fixée à un plot-support 11. Chaque partie latérale 107 s'élève par rapport au plot-support, verticalement jusqu'à dépasser la patte support 15, puis en s'inclinant en direction du plot-support 11 opposé. Latéralement, chaque partie latérale 107 du capot 105 dépasse la patte support correspondante. Un capot supérieur 109 peut venir en appui sur les parties latérales 107 afin de protéger la bande par le dessus. Ce capot supérieur 107 protège le grain transporté par la bande, en particulier lorsque cette bande est disposée en extérieur. Ce capot supérieur 107 peut également être utilisé pour la protection de personnel.

Les réalisations des figures 7 et 8 peuvent être combinées. C'est-à-dire que les pattes de protection 100 peuvent être réalisées sous une forme analogue aux parties latérales 107 du capot 105 et aussi supporter le capot supérieur 109 et en plus les bavettes d'étanchéité 104.

Les pattes de protection 100 et/ou les parties latérales 107 des capots 105 peuvent être fixées, à chaque fois à cheval sur deux plots-supports 11, d'un icône côté du convoyeur. Autrement dit, chaque plot-support 11 reçoit fixement deux pattes de protection 100 et/ou deux parties latérales 107 de capots 105 adjacentes.

De par son accès facilité, sa simplicité de protection, l'absence de surface de rétention de grain, la facilité de nettoyage, le support selon l'invention est particulièrement adapté à un usage dans le domaine de la production alimentaire, et notamment en malterie. En particulier, le support est avantageux en termes de rétention de grain, de maintenance et de nettoyage, par exemple du fait de l'absence de roulement à billes dans la zone de transport ou de roulement.

Le dispositif support de bande proposé, du fait de l'absence de surfaces de rétention de grain, implique des nettoyages moins fréquents que les dispositifs classiques. Il permet également l'utilisation d'agents nettoyants moins agressifs et donc moins nuisibles aux pièces métalliques. Ceci autorise l'utilisation d'une grande diversité d'aciers inoxydables donc permet le choix d'aciers moins coûteux, par rapport aux dispositifs classiques.

L'invention n'est pas limitée aux modes de réalisation décrits ci-dessus, à titre d'exemples uniquement, mais englobe toutes les variantes que pourra envisager l'homme du métier. En particulier:
- Chaque plot-support 11 comprend des moyens pour la fixation d'une patte de fixation 15, en sorte que ces moyens peuvent être vus comme des moyens pour la fixation du premier organe de soutien 13. Chaque patte de fixation 15 peut également être vue comme un moyen de fixation du lien souple 17, en sorte que cette patte de fixation 15 peut être vue comme un moyen pour la fixation d'un organe de soutien pour la bande du convoyeur, lorsqu'on considère le lien souple comme un organe de soutien de bande à lui seul.
- Chaque plot-support 11 comprend des moyens pour la fixation d'une patte d'accrochage 27. Ces moyens peuvent être vus comme des moyens pour la fixation de l'organe de soutien 25. Chaque patte d'accrochage 27 participe à la fixation de l'arbre de guidage de bande 30 par rapport aux plots-supports 11 respectifs. Chaque patte d'accrochage 27 peut donc également être vue comme un moyen pour la fixation d'un organe de soutien de bande d'un second type, lorsqu'on considère que l'arbre de guidage de bande 30 constitue à lui seul un tel organe.
- La face inférieure du plot-support 11 peut recevoir des pieds de soutien du dispositif support de bande.
- De préférence, l'ensemble des éléments métalliques est réalisé, lorsque cela est mécaniquement envisageable en acier inoxydable de classe 304L.

## Revendications

1. Support de convoyeur à bande comprenant deux plots-supports de bande (11) présentant chacun un passage traversant (33) propre à loger un profilé parmi deux profilés de bâti (3) rigidement liés l'un à l'autre, chacun des plots-supports présentant une face supérieure (35) sensiblement parallèle à la direction du passage traversant, une face inférieure (37), parallèle à la face supérieure (35) et opposée à cette dernière par rapport au passage traversant (33), et un organe de soutien de bande d'un premier type (13) fixé sur la face supérieure (35) de chacun des deux plots-supports (11), chacun des plots-supports présentant en outre une première face latérale (39), sensiblement perpendiculaire à la face supérieure (35) et à la face inférieure (37) et sensiblement parallèle à la direction du passage traversant (33), la première face latérale de chacun des plots-supports (11) présentant des moyens de fixation (43) adaptés à une traverse de bâti (23) à fixer sur cette première face latérale, **caractérisé en ce que** la face 779865706inférieure (37) de chacun des plots-supports (11) présente des moyens de fixation (43) adaptés à un organe de soutien de bande d'un second type (25) à fixer sur cette face inférieure (37).

2. Support selon la revendication 1 comprenant une traverse de bâti (23) fixée à la première face latérale de chacun des plots-supports (11) assurant la liaison rigide des deux profilés de bâti.

3. Support selon l'une des revendications précédentes, dans lequel l'organe de soutien de bande d'un premier type (13) comprend un lien transversal souple (17) maintenu entre deux pattes-supports verticales (15), chacune des pattes-supports verticales (15) étant fixée à la face supérieure (35) de l'un des deux plots-supports (11).

4. Support selon la revendication 3, dans lequel le lien transversal souple (17) comprend un câble souple (19) et des galets de guidage (21) montés sur ledit câble souple avec possibilité de rotation.

5. Support selon l'une des revendications précédentes comprenant un organe de soutien de bande d'un second type (23) fixé sur la face inférieure (37) de chacun des deux plots-supports (11).

6. Support selon la revendication 5, dans lequel l'organe de support de bande d'un second type (23) comprend un arbre de guidage de bande (30) et une paire de pattes d'accrochage (27), chacune des pattes de cette paire étant fixée sur la face inférieure (37) l'un des deux plots-supports (11), l'arbre de guidage de bande étant soutenu par la paire de pattes d'accrochage avec possibilité de rotation.

7. Support selon la revendication 6, dans lequel l'arbre de guidage de bande comporte une pluralité de galets de guidage de bande (33).

8. Kit destiné à former un support de convoyeur à bande selon l'une des revendications précédentes, comprenant deux plots-supports de bande (11) présentant chacun un passage traversant (33) propre à loger un profilé parmi deux profilés de bâti (3) rigidement liés l'un à l'autre, chacun des plots-supports présentant une face supérieure (35) sensiblement parallèle à la direction du passage traversant, une face inférieure (37), parallèle à la face supérieure et opposée à cette dernière par rapport au passage traversant (33), et une première face latérale (39), sensiblement perpendiculaire à la face supérieure (35) et à la face inférieure (37) et sensiblement parallèle à la direction du passage traversant (33), un organe de soutien de bande d'un premier type (13) qui se fixe sur la face supérieure de chacun des deux plots-supports, une traverse de bâti (23) qui se fixe sur la première face latérale de chacun des plots-supports (11), et un organe de soutien de bande d'un second type (25) qui se fixe sur la face inférieure de chacun des plots-supports.

9. Convoyeur à bande comprenant une pluralité de supports selon l'une des revendications 1 à 7.

## Claims

1. Conveyor belt support comprising two pad supports (11) for the belt, each containing a through passage (33) suitable for housing one profile among two rigidly connected frame profiles, each of the pads having an upper face (35) substantially parallel to the direction of the through passage, a lower face (37) parallel to the upper face (35) and opposite to this latter in relation to the through passage (33), and a belt support member of a first type (13) mounted on the upper face of each of the two pad supports (11), each of the pad supports comprising a first lateral face (39) substantially perpendicular to the upper face (35) and the lower face (37) and substantially parallel to the direction of the through passage (33), the first lateral face of each of the pad supports (11) comprising a fastening means (43) suitable for a frame traverse (23) to be fixed on this first lateral face, while the lower face (37) of each of the pad supports (11) comprises a fastening means (43) suitable for a belt support member of a second type (25) to be secured onto this lower face (37).

2. Support according to claim 1, comprising a frame traverse (23) secured to the first lateral face of each of the pad supports (11) ensuring the rigid connection of the two frame profiles.

3. Support according to one of the preceding claims, in which the belt support member of a first type (13) comprises a flexible transverse link (17) maintained between two vertical leg supports (15), each of the said vertical leg supports (15) being secured to the upper face (35) of one of the pad supports (11).

4. Support according to claim 3, in which the flexible transverse link (17) comprises a flexible cable (19) and guide rollers (21) rotatably mounted on the said flexible cable.

5. Support according to any of the preceding claims comprising a belt support member of the second type (23) attached to the lower face (37) of each of the two pad supports (11).

6. Support according to claim 5, in which the belt support member of the second type (23) comprises a belt guide shaft (30) and a pair of latching lugs (27), each lug of this pair being attached to the lower face (37) of one of the pad supports (11), the belt guide shaft being rotatably supported by the pair of latching lugs.

7. Support according to claim 6, in which the belt conveyor shaft comprises a number of belt guide rollers (33).

8. Kit intended to form a support for a belt conveyor according to any one of the preceding claims, comprising two belt pad supports (11), each containing a through passage (33) suitable for housing one profile among two rigidly connected frame profiles (3), each of the pad supports having an upper face (35) substantially parallel to the direction of the through passage, a lower face (37) parallel to the upper face and opposite this latter in relation to the through passage (33), and a first lateral face (39) substantially perpendicular to the upper face (35) and to the lower face (37) and substantially parallel to the direction of the through passage (33), a belt support member of a first type (13), which is attached to the upper face of each of the two pad supports, a frame traverse (23), which is attached to the first lateral face of each of the pad supports (11) and a belt support member of a second type (25), which is attached to the lower face of each of the pad supports.

9. Belt conveyor comprising a number of supports according to any one of claims 1 to 7.

## Patentansprüche

1. Unterbau für Bandförderer, aufweisend zwei Band-Stützblöcke (11), die jeweils einen Querdurchlass (33) präsentieren, der eines von zwei tragenden Profilen (3) aufnehmen kann, die starr miteinander verbunden sind, welche Stützblöcke jeweils eine Oberseite (35), die im Wesentlichen parallel zur Richtung der Richtung des Querdurchlasses liegt, und eine Unterseite (37) aufweisen, die parallel zur Oberseite (35) und auf der anderen Seite des Querdurchlasses (33) diesem gegenüber liegt, sowie ein Band-Halteorgan (13) eines ersten Typs, das auf der Oberseite (35) jeder der beiden Stützblöcke (11) befestigt ist, und wobei die Stützblöcke weiterhin jeweils eine erste Seitenfläche (39) aufweisen, die im Wesentlichen rechtwinklig zur Oberseite (35) und Unterseite (37) und im Wesentlichen parallel zur Richtung des Durchlasses (33) liegt, welche erste Seitenfläche jedes der Stützblöcke (11) Befestigungseinrichtungen (43) aufweist, mit denen eine Traverse (23) zur Befestigung an der ersten Seitenfläche befestigbar ist, **dadurch gekennzeichnet, dass** die Unterseite (37) jedes der Band-Stützblöcke (11) Befestigungseinrichtungen (43) aufweist, mit denen ein Band-Halteorgan (25) eines zweiten Typs auf der Unterseite (37) befestigbar ist.

2. Unterbau nach Anspruch 1 mit einer Traverse (23), die an der ersten Seitenfläche jedes Stützblocks (11) festgelegt ist und die starre Verbindung der beiden tragenden Profile sichert.

3. Unterbau nach einem der vorgehenden Ansprüche, bei dem das Band-Halteorgan (13) eines ersten Typs eine flexible Querverbindung (17) aufweist, die zwischen zwei vertikalen Stützlaschen (15) gehaltert ist, die jeweils an der Oberseite (35) eines der beiden Stützblöcke (11) festgelegt sind.

4. Unterbau nach Anspruch 3, bei dem die weiche Querverbindung (17) ein weiches Kabel (19) und Führungsrollen (21) aufweist, die auf das weiche Kabel mit der Möglichkeit zu rotieren aufgesetzt sind.

5. Unterbau nach einem der vorgehenden Ansprüche mit einem Band-Unterstützungsorgan (23) eines zweiten Typs, das an der Unterseite (37) der beiden Stützblöcke (11) befestigt ist.

6. Unterbau nach Anspruch 5, bei dem das Band-Unterstützungsorgan (23) des zweiten Typs eine Band-Führungswelle (30) und ein Paar Ansetzlaschen (27) aufweist, die jeweils an der Unterseite (37) eines des beiden Stützblöcke (11) befestigt sind, wobei die Band-Führungswelle von den Ansetzlaschen mit der Möglichkeit zu rotieren gelagert wird.

7. Unterbau nach Anspruch 6, bei dem die Band-Führungswelle eine Vielzahl von Band-Führungsrollen (33) aufweist.

8. Teilesatz zur Ausbildung eines Unterbaus für Bandförderer nach einem der vorgehenden Ansprüche, welcher Teilesatz zwei Band-Stützblöcke (11) jeweils mit einem Querdurchlass (33) zur Aufnahme eines von zwei tragenden Profilen (3) aufweist, die starr miteinander verbunden sind, wobei jeder der Stützblöcke eine Oberseite (35), die im Wesentlichen parallel zur Richtung des Querdurchlasses liegt, eine Unterseite (37), die parallel zur Oberseite und dieser gegenüber auf der anderen Seite des Querdurchlasses (33) liegt, und eine erste Seitenfläche (39) aufweist, die im wesentlichen rechtwinklig zur Oberseite (35) und Unterseite (37) und im Wesentlichen parallel zur Richtung des Querdurchlasses (33) liegt, sowie weiterhin ein Band-Unterstützungsorgan (13) des ersten Typs, das auf der Oberseite beider Stützblöcke befestigbar ist, eine Traverse (23), die an der ersten Seitenfläche der Stützblöcke (11) befestigbar ist, und ein Band-Unterstützungsorgan (25) eines zweiten Typs enthält, das an der Unterseite der Stützblöcke befestigbar ist.

9. Bandförderer, aufweisend eine Vielzahl der Stützen nach einem der Ansprüche 1 bis 7.
